# DEMANDE DE BREVET EUROPEEN

(11) **EP 2 479 061 A1**
(43) Date de publication de la demande: **25.07.2012**
(21) Numéro de dépôt: 12151960.7
(22) Date de dépôt: 20.01.2012
(51) Int. Cl.: B60N 3/08

(54) **Dispositif de collecte de cendres avec aspiration d'air**

(30) Priorité: 20.01.2011 FR 1150439
(71) Demandeur: Pierron, François, 57130 Jouy-Aux-Arches (FR)
(72) Inventeur: Pierron, François, 57130 JOUY-AUX-ARCHES (FR)
(74) Mandataire: Jacobson, Claude

(57) **Abrégé**

Le dispositif de collecte de cendres comprend un réceptacle (11) adapté pour collecter des cendres, le réceptacle (11) étant mobile par rapport à une structure (5) entre une position escamotée et une position d'utilisation dans laquelle un orifice (23) du réceptacle (11) est accessible pour permettre de déposer des cendres dans le réceptacle (11).

Le dispositif de collecte (7) comprend un ensemble d'aspiration (13) agencé pour aspirer l'air à l'intérieur du réceptacle (11) au moins en position d'utilisation du réceptacle (11).

## Description

L'invention concerne en général les dispositifs de type cendriers, destinés à être installés dans des lieux fermés, par exemple une voiture automobile.

Plus précisément, l'invention concerne un dispositif de collecte de cendres, du type comprenant un réceptacle adapté pour collecter des cendres, le réceptacle étant mobile par rapport à une structure entre une position escamotée et une position d'utilisation dans laquelle un orifice du réceptacle est accessible pour permettre de déposer des cendres dans le réceptacle.

II est connu de prévoir des cendriers à bord des véhicules automobiles, le réceptacle du cendrier étant escamotable dans un logement ménagé par exemple dans la planche de bord ou dans la structure d'un ouvrant du véhicule.

Quand un des passagers du véhicule fume, la fumée peut gêner les autres passagers. Par ailleurs, les cendres stockés à l'intérieur du réceptacle, à chaque ouverture du cendrier, dégage une odeur qui peut incommoder les passagers.

Dans ce contexte, l'invention vise à proposer un dispositif de collecte de cendres qui permet d'augmenter le confort, notamment dans les lieux fermés.

A cette fin, l'invention porte sur un dispositif de collecte de cendres du type précité, **caractérisé en ce que** le dispositif de collecte comprend un ensemble d'aspiration agencé pour aspirer l'air à l'intérieur du réceptacle au moins en position d'utilisation du réceptacle.

L'ensemble d'aspiration aspire ainsi les fumées se dégageant des cendres déjà déposées dans le réceptacle. L'ensemble d'aspiration aspire en outre l'air venant de l'extérieur du réceptacle à travers l'orifice, et contribue à évacuer la fumée de cigarettes de l'atmosphère. L'air et la fumée transitent par l'intérieur du réceptacle, et sont aspirés et évacués par l'ensemble d'aspiration. L'atmosphère est ainsi purifiée.

Ce dispositif est particulièrement adapté pour équiper les habitacles de véhicules automobiles. II est également particulièrement adapté pour équiper d'autres lieux confinés, comme des bars, des boîtes de nuit, etc ...

Le dispositif peut également présenter une ou plusieurs des caractéristiques ci-dessous, considérée(s) individuellement ou selon toutes les combinaisons techniquement possibles.

De préférence, le dispositif comprend un logement ménagé dans la structure, l'orifice du réceptacle étant situé à l'intérieur du logement en position d'obturation, et au moins partiellement à l'extérieur du logement en position d'utilisation.

La structure, comme indiqué plus haut, est par exemple une planche de bord de véhicule automobile, un ouvrant de véhicule automobile, une console centrale de véhicule automobile, une cloison ou un mur intérieur d'un local etc .... De préférence, cette structure est de taille suffisante pour permettre de créer un logement de réception du réceptacle, et pour pouvoir loger également l'ensemble d'aspiration. Le dispositif de collecte comporte typiquement une liaison du réceptacle à la structure, agencée pour guider le déplacement du réceptacle entre sa position escamotable et sa position d'utilisation. Cette liaison est par exemple une liaison de type glissière, ou une liaison de type pivotante, ou tout autre type de liaison adaptée. Dans la position d'obturation, le réceptacle est de préférence entièrement logé à l'intérieur du logement. Dans la position d'utilisation, le réceptacle est typiquement partiellement situé à l'intérieur du logement, et partiellement situé à l'extérieur du logement. De même, l'orifice est partiellement situé à l'intérieur du logement et partiellement situé à l'extérieur du logement.

Le réceptacle peut présenter toute sorte de forme. L'orifice est typiquement tourné vers le haut. II est situé à l'opposé du fond du réceptacle.

L'ensemble d'aspiration comprend typiquement une bouche d'aspiration ménagée dans une paroi du logement. De préférence, la bouche d'aspiration est ménagée dans une paroi supérieure du logement, délimitant celui-ci vers le haut. Ainsi, la bouche d'aspiration aspire l'air à l'intérieur du réceptacle à travers l'orifice. De préférence, la bouche d'aspiration est ménagée dans une zone de la paroi supérieure du logement choisie pour que la bouche d'aspiration soit en regard de l'orifice à la fois quand le réceptacle est en position d'utilisation et quand le réceptacle est en position escamotée à l'intérieur du logement. Le dispositif d'aspiration est ainsi adapté pour aspirer l'air à l'intérieur du réceptacle dans les deux positions du réceptacle, et même dans toutes les positions du réceptacle.

La bouche d'aspiration pourrait être ménagée dans d'autres parois du logement, sous réserve de permettre l'aspiration de l'air dans le réceptacle quelle que soit la position du réceptacle.

De préférence, en position d'utilisation du réceptacle, l'orifice comporte une première zone située en regard de la bouche d'aspiration, et une seconde zone située à l'extérieur du logement. Ainsi, on crée un chemin de passage pour l'air depuis l'extérieur du logement jusqu'à la bouche d'aspiration, d'abord à travers la seconde zone, puis à travers le réceptacle, puis à travers la première zone.

L'ensemble d'aspiration présente de préférence deux régimes de fonctionnement, un premier régime de fonctionnement avec un premier débit d'aspiration adapté pour aspirer une fumée, et un deuxième régime de fonctionnement avec un second débit d'aspiration adapté pour aspirer un mégot de cigarette à l'intérieur du réceptacle. Le premier débit d'aspiration est inférieur au second débit d'aspiration. Les premiers et seconds débits sont dimensionnés en fonction de la taille du réceptacle, de la taille de l'orifice, de la section de passage des conduits d'aspiration de l'ensemble d'aspiration, etc .... Les cendres déposées à l'intérieur du réceptacle sont aspirées dans le deuxième régime de fonctionnement de l'ensemble d'aspiration. Elles sont en effet plus légères que les mégots et sont entraînés avec le flux d'air dans le deuxième régime de fonctionnement. Ainsi, le deuxième régime de fonctionnement est prévu pour vider complètement l'intérieur du réceptacle une fois que le dispositif de collecte de cendres aura été utilisé. Les mégots et les cendres sont transférés dans un récipient fermé, situé dans un endroit isolé de la zone où se tiennent les passagers. Ainsi, aucune mauvaise odeur ne se dégage du réceptacle après utilisation de celui-ci du fait de cendres ou de mégots restant en permanence à l'intérieur du dispositif de collecte.

Le récipient de stockage dans lequel sont transférés les cendres et les mégots par le dispositif d'aspiration est agencé pour pouvoir être vidé de manière périodique.

Le dispositif de collecte comporte également de préférence un dispositif de commande de l'ensemble d'aspiration, prévu pour déclencher l'aspiration au moins quand le réceptacle occupe sa position d'utilisation. Ce dispositif de commande comporte typiquement un capteur de positions, agencé pour détecter que le réceptacle atteint sa position d'utilisation, et un calculateur. Le capteur informe le calculateur quand il détecte que le réceptacle atteint sa position d'utilisation. Le calculateur déclenche l'ensemble d'aspiration.

En variante, le dispositif de commande est prévu pour déclencher l'aspiration quand le réceptacle quitte sa position escamotée. II peut également être prévu pour déclencher l'ensemble d'aspiration quand le réceptacle passe à une position intermédiaire quelconque entre la position escamotée et la position d'utilisation.

De préférence, le dispositif de commande est prévu pour placer l'ensemble d'aspiration dans son premier régime de fonctionnement quand le réceptacle passe de sa position escamotée à sa position d'utilisation, et pour placer l'ensemble d'aspiration dans son second régime de fonctionnement quand le réceptacle passe de sa position d'utilisation à sa position escamotée.

Ainsi, l'ensemble d'aspiration aspire les fumées quand le réceptacle est dans sa position d'utilisation. Quand l'utilisateur ramène le réceptacle dans sa position escamotée, l'ensemble d'aspiration est placé dans son second régime de fonctionnement, de façon à permettre l'aspiration des cendres et des mégots de cigarettes collectés dans le réceptacle.

Dans ce cas, le dispositif de commande comporte deux capteurs, l'un prévu pour détecter que le réceptacle arrive à sa position d'utilisation, et l'autre que le réceptacle arrive en position escamotée. Alternativement, un même capteur est utilisé pour détecter les deux positions.

Le dispositif de commande est adapté pour arrêter l'ensemble d'aspiration après une temporisation, une fois le réceptacle revenu à sa position escamotée à partir de sa position d'utilisation. La temporisation est d'une durée choisie pour permettre l'aspiration complète des cendres et des mégots.

En variante, l'ensemble d'aspiration présente plus de deux régimes de fonctionnement, chaque régime de fonctionnement étant caractérisé par un débit d'aspiration différent. Par exemple, le débit d'aspiration peut être d'autant plus fort que le réceptacle s'éloigne de sa position escamotée et se rapproche de sa position d'utilisation. Le débit d'aspiration peut varier de manière discontinue, par incréments, ou au contraire varier de manière continue.

Alternativement, le dispositif de commande comporte un organe de commande manuelle, prévu pour être actionné par un utilisateur. Cet organe de commande est placé par exemple sur la structure dans laquelle est ménagé le logement de réception du réceptacle.

Par exemple, l'organe de commande peut présenter trois positions. Une position arrêt de l'aspiration, une position « aspiration de la fumée » et une position « vidange du réceptacle ». L'organe de commande commande l'ensemble d'aspiration directement ou par l'intermédiaire d'un calculateur. Quand l'organe de commande est en position aspiration des fumées, l'ensemble d'aspiration est placé dans son premier régime de fonctionnement. Quand l'organe de commande est dans la position vidange du réceptacle, l'ensemble d'aspiration est placé dans son second régime de fonctionnement. Dans ce cas, le dispositif de commande ne comporte pas de capteur de position pour détecter la position du réceptacle: l'utilisateur change lui-même le régime de fonctionnement de l'ensemble d'aspiration, comme il le souhaite, et déplace lui-même le réceptacle entre ces positions.

En variante, l'organe de commande n'a que deux positions, par exemple une position marche et une position arrêt. Le régime de fonctionnement de l'ensemble d'aspiration est alors géré par le dispositif de commande, en fonction des mouvements du réceptacle, comme décrit ci-dessus.

Selon une autre variante, l'organe de commande ne comporte que deux positions: une position « évacuation des fumées », et une position « vidange du réceptacle », correspondant respectivement au premier et second régime de fonctionnement de l'ensemble d'aspiration. Dans ce cas, la mise en marche et l'arrêt de l'ensemble d'aspiration sont gérés par le dispositif de commande en fonction des mouvements du réceptacle, comme décrit plus haut.

Selon encore une autre variante de réalisation, l'organe de commande est un variateur permettant de régler de manière continue le débit d'aspiration de l'ensemble d'aspiration. La mise en marche et l'arrêt de l'ensemble d'aspiration sont par exemple gérés par le dispositif de commande en fonction des déplacements du réceptacle.

Typiquement, l'ensemble d'aspiration comporte:
- un organe d'aspiration,
- un conduit d'aspiration raccordant la bouche d'aspiration à une entrée d'aspiration de l'organe d'aspiration,
- un conduit de refoulement raccordé à une sortie de refoulement de l'organe d'aspiration.

De préférence, l'ensemble d'aspiration comporte encore:
- un filtre, de taille adaptée pour arrêter les cendres et les mégots de cigarettes,
- le récipient de stockage étant agencé pour collecter par gravité les cendres et les mégots arrêtés par le filtre.

L'organe d'aspiration est typiquement un ventilateur ou une pompe de tout type adapté.

Le conduit de refoulement rejette l'air aspiré dans l'atmosphère. Le filtre est typiquement placé sur le conduit d'aspiration. Le filtre est par exemple une grille métallique, ou tout type de filtre adapté pour piéger des cendres.

Le récipient de stockage des cendres et des mégots est placé au pied de la grille ou est raccordé au conduit d'aspiration par un conduit de liaison. Le conduit de liaison débouche à une extrémité au pied du filtre, et à l'autre extrémité dans le récipient de stockage. Sa pente est telle que les cendres et les mégots glissent par gravité jusque dans le récipient de stockage.

En variante, le dispositif de collecte de cendres comporte un ou plusieurs filtres supplémentaires intercalés dans le conduit d'aspiration ou dans le conduit de refoulement. Ces filtres supplémentaires sont de préférence placés en aval du filtre destiné à arrêter les cendres et les mégots. Les filtres supplémentaires sont destinés à arrêter et/ou récupérer la nicotine, les poussières fines et toutes sortes de polluants présents dans la fumée de cigarette. Ces filtres sont par exemple des grilles avec des orifices de passage plus fins que ceux de la grille destinée à arrêter les cendres, ou des éléments pourvus d'un catalyseur destiné à piéger sélectivement certaines espèces chimiques, etc ...

En variante, l'ensemble d'aspiration comporte des bouches supplémentaires prévues pour aspirer l'air directement à l'extérieur du réceptacle. Ces bouches sont ainsi prévues pour aspirer l'air directement dans l'atmosphère, par exemple dans l'atmosphère de l'habitacle du véhicule automobile ou dans le lieu confiné où est installé le dispositif de collecte des cendres. L'aspiration des fumées est ainsi beaucoup plus efficace. Par exemple, ces bouches supplémentaires sont directement raccordées au conduit d'aspiration de l'ensemble d'aspiration. Elles s'ouvrent typiquement dans la structure dans laquelle est ménagé le logement.

Dans ce cas, il est avantageux de prévoir que, même après que le réceptacle soit revenu à sa position escamotée, l'organe d'aspiration continue à fonctionner à faible régime. L'organe d'aspiration maintient ainsi un faible débit d'aspiration à travers les bouches supplémentaires, qui empêche les reflux depuis le conduit d'aspiration vers l'habitacle du véhicule. De tels reflux peuvent créer une odeur déplaisante dans l'habitacle, notamment une odeur de tabac froid.

D'autres caractéristiques et avantages de l'invention ressortiront dans la description détaillée sur des données ci-dessous, à titre indicatif et nullement limitatif, en référence aux figures annexées, parmi lesquelles :
- la figure 1 est une représentation schématique, de côté, d'un véhicule automobile dont la planche de bord est équipée d'un dispositif de collecte de cendres conforme à l'invention ;
- la figure 2 est une représentation schématique, agrandie, du dispositif de collecte de cendres de la figure 1, ce dispositif étant à l'arrêt ;
- la figure 3 est une vue similaire à celle de la figure 2, le dispositif de collecte de cendres étant représenté dans une situation où l'ensemble d'aspiration aspire les fumées ; et
- la figure 4 est une vue similaire à celles des figures 2 et 3, le dispositif d'aspiration étant représenté dans une situation dans laquelle l'ensemble d'aspiration vidange le réceptacle.

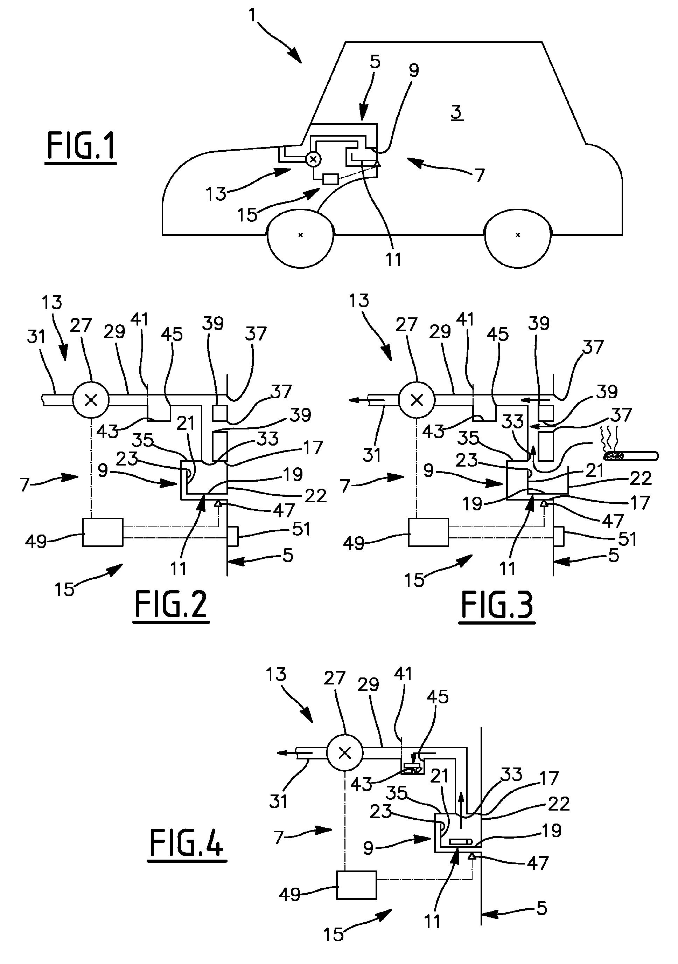

La voiture 1 représentée sur la figure 1 comporte un habitacle 3 et une planche de bord 5, représentée de manière symbolique. La planche de bord 5 est équipée d'un dispositif de collecte de cendres 7.

Le dispositif de collecte de cendres 7 comprend:
- un logement 9 ménagé dans la planche de bord 5 ;
- un réceptacle 11 adapté pour collecter les cendres, le réceptacle 11 étant mobile par rapport à la planche de bord 5 entre une position escamotée dans le logement 9 et une position d'utilisation dans lequel le réceptacle est au moins partiellement situé hors du logement 9 ;
- un ensemble 13 d'aspiration, agencé pour aspirer de l'air à l'intérieur du réceptacle 11;
- un dispositif 15 de commande de l'ensemble d'aspiration 13.

Le logement 9 peut présenter toutes sorte de formes. II est ouvert vers l'habitacle 3 par une ouverture 17 (figure2).

Le réceptacle 11 peut présenter toute sorte de forme. II est délimité par un fond 19, des parois latérales 21, 22 et présente un orifice 23 à l'opposé du fond. L'orifice 23 est prévu pour permettre aux utilisateurs de déposer des cendres dans le réceptacle. La paroi latérale 22 vient fermer l'ouverture 17 en position escamotée, comme visible sur la figure 2. Dans cette position, l'orifice 22 est entièrement à l'intérieur du logement 9. Dans la position d'utilisation, représentée sur la figure 3, le réceptacle 11 est partiellement sorti du logement 9 à travers l'ouverture 17. L'orifice 23 est situé partiellement à l'intérieur du logement et partiellement à l'extérieur, de telle sorte que l'utilisateur peut déposer des cendres dans le réceptacle. La paroi 22 est située à l'extérieur du logement.

Le dispositif de collecte de cendres comprend typiquement des moyens de liaison glissière entre le réceptacle 11 et la planche de bord 5. Ces moyens ne sont pas représentés. Ils permettent de guider le déplacement du réceptacle entre sa position escamotée et sa position d'utilisation.

L'ensemble d'aspiration 13 comporte un organe d'aspiration 27, un conduit d'aspiration 29 raccordé à une entrée d'aspiration de l'organe 27, et un conduit de refoulement 31 raccordé à une sortie de refoulement de l'organe 27. L'organe d'aspiration 27 est typiquement une pompe ou un ventilateur. Le conduit d'aspiration 29, à son extrémité opposée à l'organe d'aspiration 27, est raccordé à une bouche d'aspiration 33 ménagée dans la paroi supérieure 35 du logement 9. Dans la position escamotée du réceptacle, la bouche d'aspiration 33 est située en regard d'une première zone de l'orifice 23, située vers la paroi 22 (voir figure 2). Dans la position d'utilisation du réceptacle, la bouche 33 est située en regard d'une seconde zone de l'orifice, à proximité d'une paroi latérale opposée à la paroi 22 du réceptacle (voir figure 3).

Dans la variante de réalisation représentée sur les figures 2 et 3, l'ensemble d'aspiration comporte des bouches supplémentaires 37 prévues pour aspirer l'air directement à l'extérieur du réceptacle. Les bouches 37 sont portées par la planche de bord 5. Elles débouchent dans l'habitacle 3. Elles sont raccordées par des conduits de dérivation 39 au conduit d'aspiration 29.

L'ensemble d'aspiration 13 comporte encore un filtre 41 adapté pour arrêter les cendres et les mégots de cigarettes, et un récipient 43 adapté pour collecter par gravité les cendres et les mégots arrêtés par le filtre 41. Le filtre 41 est par exemple une grille métallique intercalée dans le conduit d'aspiration 29, avec des ouvertures de taille adaptée pour empêcher le passage des mégots de cigarettes et des cendres.

Le réservoir 43 est situé au pied du filtre 41. II est situé immédiatement en amont du filtre 41, en-dessous de celui-ci et présente une ouverture 45 mettant en communication l'intérieur du réservoir 43 avec l'intérieur du conduit d'aspiration 29. L'ouverture 45 est située de telle sorte que les éléments arrêtés par le filtre 41 glissent par gravité à travers l'ouverture 45 dans le réservoir 43.

En variante, le réservoir 43 pourrait être décalé vers le bas par rapport au filtre 41, l'ouverture 45 étant raccordée au conduit d'aspiration 29 par un conduit de liaison qui s'ouvre dans le conduit d'aspiration 29, en amont et au pied du filtre 41.

Le dispositif de commandement 15 comporte un capteur 47 de détection de la position du réceptacle 11, et un calculateur 49 prévu pour piloter l'organe d'aspiration 27. Le capteur 47 est adapté pour détecter que le réceptacle 11 est en position d'utilisation, et pour détecter que le réceptacle 11 est en position escamotée. II renseigne le calculateur 49.

Le calculateur 49 commande l'organe d'aspiration 27 en fonction des informations transmises par le capteur 47. II est prévu pour placer l'organe d'aspiration 27 :
- soit à l'arrêt, auquel cas le débit d'aspiration créé par l'organe d'aspiration 27 est nul ;
- dans un premier régime de fonctionnement, dans lequel l'organe d'aspiration génère un premier débit d'aspiration adapté pour aspirer la fumée ;
- dans un deuxième régime de fonctionnement, dans lequel l'organe d'aspiration génère un second débit d'aspiration, supérieur au premier, adapté pour aspirer les mégots de cigarettes et les cendres à l'intérieur du réceptacle 11.

Le fonctionnement du dispositif de collecte de cendres va maintenant être détaillés.

L'ensemble d'aspiration 13 est normalement à l'arrêt, le débit d'aspiration généré par l'organe d'aspiration 27 étant nul. Le réceptacle 11 est normalement dans sa position escamotée.

Quand un utilisateur veut utiliser le dispositif de collecte de cendres, il déplace le réceptacle 11 de sa position escamotée vers sa position d'utilisation. Le capteur 47 détecte que le réceptacle est dans sa position d'utilisation et en informe le calculateur 49. Le calculateur 49 commande à l'ensemble d'aspiration de passer dans le premier régime de fonctionnement. Dans ce régime, l'organe d'aspiration 27 génère un premier débit d'aspiration. Comme visible sur la figure 3, l'air de l'habitacle du véhicule est aspiré. Cet air est aspiré par les bouches supplémentaires 37. II est également aspiré vers l'intérieur du réceptacle 11 à travers la zone de l'orifice 23 située hors du logement 9. De l'intérieur du réceptacle, il est aspiré vers le conduit d'aspiration 29 à travers la bouche 33. L'air chargé en fumée de cigarette traverse le filtre 41, l'organe d'aspiration 27, et est rejeté vers l'extérieur du véhicule par le conduit de refoulement 31.

L'utilisateur peut faire tomber les cendres de sa cigarette à l'intérieur du réceptacle, par la zone de l'orifice 23 situé hors du logement 9.

Quand l'utilisateur ne veut plus fumer, et ne veut donc plus utiliser le dispositif de collecte de cendres, il repousse le réceptacle 11 dans sa position escamotée. Cette situation est représentée sur la figure 4. Le capteur 47 détecte quand le réceptacle 11 arrive en position escamotée. II en informe le calculateur 49, qui fait passer l'ensemble d'aspiration 13 dans son second régime de fonctionnement. Dans ce second régime, l'organe d'aspiration 27 génère un débit d'aspiration plus élevé, de telle sorte que les mégots et les cendres qui se trouvent dans le réceptacle 11 sont aspirés. Les mégots et les cendres sont aspirés par le conduit d'aspiration 29 à travers la bouche 33. Ils sont arrêtés par le filtre 41 et tombent par gravité dans le récipient 43.

Le calculateur 49 déclenche une temporisation au moment où le capteur 47 lui indique que le réceptacle 11 atteint sa position escamotée. Le calculateur 49 maintient l'ensemble d'aspiration 13 dans son second régime de fonctionnement pendant une durée prédéterminée, puis le fait passer à l'arrêt.

En variante, comme décrit plus haut, le dispositif de commande 13 peut comporter un organe de commande manuelle 51, placé sur la planche de bord. L'organe de commande 51 est par exemple un bouton de commande à plusieurs positions. II est déplaçable manuellement par l'utilisateur du dispositif de collecte de cendres. Le bouton de commande 51 permet de commander au calculateur 49 de faire passer l'ensemble d'aspiration dans l'un ou l'autre des états décrits ci-dessus (arrêt, premier régime de fonctionnement, second régime de fonctionnement).

Dans une variante non représentée le dispositif de collecte de cendres comporte un flexible d'aspiration, raccordé au conduit d'aspiration. Ce flexible est situé dans l'habitacle, ou est logé dans un espace de rangement et peut être déployé dans l'habitacle. II comporte à une extrémité une bouche d'aspiration adaptée pour aspirer une cendre ou un mégot tombé hors du réceptacle. Le flexible comporte de préférence un obturateur susceptible de sélectivement bloquer ou autoriser l'aspiration à travers le flexible.

Dans une autre variante non représentée, le dispositif de commande 13 comporte une sonde adaptée pour mesurer la température de l'air dans l'habitacle du véhicule. Le dispositif de commande est programmé pour mettre en fonctionnement l'ensemble d'aspiration si la température de l'air dépasse une valeur prédéterminée. Dans cette variante de réalisation, l'ensemble d'aspiration comporte des bouches d'aspiration supplémentaires 37 prévues pour aspirer directement l'air de l'habitacle. L'ensemble d'aspiration 13 est maintenu en fonctionnement tant que la température mesurée est supérieure à la valeur prédéterminée. II est ainsi possible de refroidir l'habitacle.

## Revendications

1. Dispositif de collecte de cendres, le dispositif (7) comprenant un réceptacle (11) adapté pour collecter des cendres, le réceptacle (11) étant mobile par rapport à une structure (5) entre une position escamotée et une position d'utilisation dans laquelle un orifice (23) du réceptacle (11) est accessible pour permettre de déposer des cendres dans le réceptacle (11), **caractérisé en ce que** le dispositif de collecte (7) comprend un ensemble d'aspiration (13) agencé pour aspirer l'air à l'intérieur du réceptacle (11) au moins en position d'utilisation du réceptacle (11).

2. Dispositif selon la revendication 1, **caractérisé en ce qu'**il comprend un logement (9) ménagé dans la structure (5), l'orifice (23) du réceptacle (11) étant à l'intérieur du logement (9) en position d'obturation et au moins partiellement à l'extérieur du logement (9) en position d'utilisation.

3. Dispositif selon la revendication 2, **caractérisé en ce que** l'ensemble d'aspiration (13) comprend une bouche d'aspiration (33) ménagée dans une paroi (35) du logement (9).

4. Dispositif selon l'une quelconque des revendications 2 ou 3, **caractérisé en ce que**, en position d'utilisation du réceptacle (11), l'orifice (23) comporte une première zone située en regard de la bouche d'aspiration (33) et une seconde zone située à l'extérieur du logement (9).

5. Dispositif selon l'une quelconque des revendications précédentes, **caractérisé en ce que** l'ensemble d'aspiration (13) présente deux régimes de fonctionnement, un premier régime de fonctionnement avec un premier débit d'aspiration adapté pour aspirer une fumée, et un deuxième régime de fonctionnement avec un second débit d'aspiration adapté pour aspirer un mégot de cigarette à l'intérieur du réceptacle (11).

6. Dispositif selon l'une quelconque des revendications précédentes, **caractérisé en ce qu'**il comporte un dispositif (15) de commande de l'ensemble d'aspiration (13), prévu pour déclencher l'aspiration au moins quand le réceptacle (11) occupe sa position d'utilisation.

7. Dispositif selon la revendication 5 combiné à la revendication 6, **caractérisé en ce que** le dispositif de commande (15) est prévu pour placer l'ensemble d'aspiration (13) dans son premier régime de fonctionnement quand le réceptacle (11) passe de sa position escamotée à sa position d'utilisation, et pour placer l'ensemble d'aspiration (13) dans son second régime de fonctionnement quand le réceptacle (11) passe de sa position d'utilisation à sa position escamotée.

8. Dispositif selon la revendication 7, **caractérisé en ce que** le dispositif de commande (15) est adapté pour arrêter l'ensemble d'aspiration (13) après une temporisation quand le réceptacle (11) passe de sa position d'utilisation à sa position escamotée.

9. Dispositif selon l'une quelconque des revendications précédentes, **caractérisé en ce que** l'ensemble d'aspiration (13) comporte un filtre (41) adapté pour arrêter les cendres et les mégots de cigarettes, et un récipient (43) adapté pour collecter par gravité les cendres et les mégots arrêtés par le filtre (41).

10. Dispositif selon l'une quelconque des revendications précédentes, **caractérisé en ce que** l'ensemble d'aspiration (13) comporte des bouches supplémentaires (37) prévues pour aspirer l'air directement à l'extérieur du réceptacle (11).
